# EUROPÄISCHE PATENTSCHRIFT

(11) **EP 2 368 785 B1**
(45) Veröffentlichungstag und Bekanntmachung des Hinweises auf die Patenterteilung: **25.09.2013**
(21) Anmeldenummer: 11001726.6
(22) Anmeldetag: 02.03.2011
(51) Int. Cl.: B62D 5/04, B66F 9/075

(54) **Verfahren zur Steuerung eines elektrischen Antriebes einer mobilen Arbeitsmaschine, insbesondere eines Lenkantriebs**
Method for controlling an electric drive of a mobile work device, in particular a steering drive
Procédé de commande d'un entraînement électrique d'une machine de travail mobile, notamment d'un actionnement de direction

(30) Priorität: 26.03.2010 DE 102010012887
(43) Veröffentlichungstag der Anmeldung: 28.09.2011
(73) Patentinhaber: STILL GmbH, 22113 Hamburg (DE)
(72) Erfinder: Bierhoff, Michael, Dr., 22081 Hamburg (DE)
(74) Vertreter: Geirhos, Johann

(56) Entgegenhaltungen:
- DE-A1- 19 625 350
- DE-A1-102008 033 389

## Beschreibung

Die Erfindung betrifft ein Verfahren zur Steuerung eines elektrischen Antriebs einer Komponente einer mobilen Arbeitsmaschine. Insbesondere betrifft die Erfindung ein Verfahren zur Steuerung eines Lenkantriebs einer elektrischen Lenkung der mobilen Arbeitsmaschine. Dabei weist der elektrische Antrieb einen Drehstrommotor und einen die Drehzahl des Drehstrommotors erfassenden Drehzahlsensor, einen regelbaren Umrichter für die Versorgung des Drehstrommotors mit elektrischer Energie und eine Steuervorrichtung auf, die in Wirkverbindung mit einem Sollwertgeber, dem Umrichter, und dem Drehzahlsensor steht, und wobei bei dem Verfahren die Steuervorrichtung abhängig von dem Signal des Sollwertgebers den Drehstrommotor mit einer unter Verwendung des Signals des Drehzahlsensors bestimmten Istdrehzahl feldorientiert regelt.

Bekannt sind elektrische Antriebe von Komponenten von mobilen Arbeitsmaschinen, die als Stellantrieb eingesetzt werden und bei denen durch eine Regelung die angetriebene Komponente in eine durch einen Sollwert vorgegebene Position bewegt werden soll.

Ein beispielhafter Anwendungsfall ist die insbesondere bei Flurtörderzeugen, etwa Gabelstaplem, eingesetzte elektrische Lenkung, bei der die Übertragung der Lenkbefehle zwischen einem Lenkgeber als Sollwertgeber, wie etwa einem Lenkrad, und einem gelenkten Rad über eine elektrische Signalleitung und nicht über eine mechanische Verbindung erfolgt. Bei diesen bekannten elektrischen Lenkungen werden in dem Lenkgeber Lenkbefehlsignale als Sollwerte.erzeugt und wird durch eine Steuerung ein Lenkmotor angesteuert. Der Lenkmotor wirkt über ein Getriebe oder eine Kette auf eine Drehachse des gelenkten Rades ein und bestimmt dessen Einschlagwinkel durch Verdrehen des Rades. Bekannt ist weiter, dass die Regelung des Einschlagwinkels durch die Steuerung mithilfe einer kaskadierten Regelstruktur erfolgt. Dabei werden drei Regelkreise ineinander verschachtelt. Den für die Regelung eines Elektromotors üblichen Regelungen für Strom und Drehzahl wird bei dem Lenkmotor noch eine Lageregelung überlagert. Für die Lageregelung kommt dabei ein Sensor zum Einsatz, der entweder direkt den Einschlagwinkel des gelenkten Rades erfasst, wie beispielsweise ein Drehpotentiometer, oder es wird ein Drehzahlsensor eingesetzt, der mechanisch mit dem Drehantriebs des gelenkten Rades verbunden ist und dessen Messwerte aufintegriert werden, um einen Einschlagwinkel des gelenkten Rades zu erhalten.

Bei vielen elektrischen Antrieben ist eine hohe Zuverlässigkeit gegenüber einem Ausfall des Antriebs bzw. eine Überwachung auf einen solchen Ausfall erwünscht. Dies ist insbesondere bei elektrischen Lenkantrieben erforderlich. Um dies zu erreichen, ist bekannt, einen Lageistwertsensor, der die Position der angetriebenen Komponente oder bei einer elektrischen Lenkung des Einschlagwinkels des gelenkten Rades erfasst, redundant vorzusehen. Redundanz wird erreicht, indem beispielsweise zwei Sensoren vorgesehen werden, oder spezielle Sensoren, wie bei einer Lenkung ein Doppelspurpotentiometer.

Für die bei den elektrischen Antrieben zum Einsatz kommenden Elektromotoren, insbesondere für einen Lenkmotor elektrischer Lenkungen, ist bekannt, einen Drehstrommotor und wegen seines einfachen Aufbaus mit einem Kurzschlussläufer insbesondere einen Drehstrom-Asynchronmotor einzusetzen. Dabei wird der Drehstrom-Asynchronmotor über einen Wechsel- oder Umrichter angesteuert und kann dadurch in einem großen Drehmoment- und Drehzahlbereich geregelt werden. Für die Regelung des Drehstrom-Asynchronmotors ist eine feldorientierte Regelung bekannt, bei der für die Regelung des Drehmoments die Kenntnis des Betrages und der Richtung des magnetischen Flussvektors erforderlich ist. Um diesen Flussvektor bestimmen zu können, wird ein Drehzahlsensor für die Messung der Motordrehzahl eingesetzt und die gemessene Motordrehzahl als wesentliche Größe verwendet, um mithilfe einer Modellrechnung des Verhaltens des Asynchron-Drehstrommotors den Flussvektor zu bestimmen.

Nachteilig an diesem Stand der Technik ist, dass die Betriebsbedingungen für einen Drehzahlsensor insbesondere bei einem elektrischen Antrieb in einer mobilen Arbeitsmaschine ungünstig sind und es daher relativ häufig zu Ausfällen kommt. Der Drehzahlsensor ist starken mechanischen Beanspruchungen, wie Erschütterungen, und auch thermischen Belastungen ausgesetzt. Elektromagnetische Effekte können ebenfalls zu Störungen führen. Weiter ist nachteilig an diesem Stand der Technik, dass die Redundanz nicht für die unterlagerten Regelkreise vorhanden ist. So kann zwar ein Ausfall eines Lageistwertsensors erkannt werden, wenn das Lagesignal redundant vorhanden ist, jedoch nicht ein Ausfall des Drehzahlsensors an einer Motorwelle des Asynchron-Drehstrommotors oder ein Fehler in der Regelung. Der schwer zu erkennende Ausfall eines Drehzahlsensors führt jedoch oft zu einem Überstromfehler oder einem sonstigen Folgefehler und somit zu einem Abschalten des elektrischen Antriebs. Dies ist vor allem bei einer elektrischen Lenkung einer mobilen Arbeitsmaschine ungünstig, da diese gegebenenfalls durch eine Notbremsung abgebremst werden muss und danach ohne Lenkung nicht mehr bewegt werden kann, auch wenn in einem solchen Schadensfall eventuell nur über eine kurze Strecke noch ein Fahrweg frei geräumt werden soll, da die mobile Arbeitsmaschine diesen blockiert. Eine redundante Ausführung des Drehzahlsensors ist jedoch aufwändig und teuer.

Es sind auch feldorientierte Regelungen von Asynchron-Drehstrommotoren bekannt, die ohne Drehzahlsensor auskommen und die Drehzahl sowie die Lage des magnetischen Flussvektors allein aus einer Modellrechnung bestimmen.

Diese Regelung ist aber oftmals weniger genau und erfordert in der Auslegung und Erstellung des Rechenmodells Aufwand, da jede denkbare Betriebssituation genau genug berücksichtigt werden muss.

Aus der DE 10 2006 035 863 A1 ist eine Lenkvorrichtung für ein Flurförderzeug mit einem Lenkgeber, der beispielsweise als Lenkrad ausgeführt ist, mindestens einem mit einer Fahrbahn in Kontakt stehenden gelenkten Rad und einem elektrischen Lenkmotor zum Bewegen des mindestens einen gelenkten Rads bekannt. Ein Radsensor erfasst eine Lenkstellung und/oder eine Lenkbewegung des gelenkten Rads und eine elektronische Steuervorrichtung steht mit dem Lenkgebersensor, dem Radsensor und dem elektrischen Lenkmotor in Wirkverbindung.

Aus der DE 10 2008 033 389 A1 ist ein Verfahren zur Steuerung einer Lenkvorrichtung für ein Flurförderzeug mit einem Asynchron-Drehstrommotor als Lenkmotor ohne Drehzahlsensor bekannt, bei dem die Drehzahl sowie die Lage des magnetischen Flussvektors aus einer Modellrechnung bestimmt werden.

Die DE 196 25 350 A1 beschreibt die Merkmale des Oberbegriffs des Unabhängigen Anspruchs 1.

Der vorliegenden Erfindung liegt die Aufgabe zugrunde, ein Verfahren zur Steuerung eines elektrischen Antriebs einer Komponente einer mobilen Arbeitsmaschine, insbesondere eines Lenkantriebs, zur Verfügung zu stellen, mit dem Fehler erkannt werden und die Betriebssicherheit erhöht wird.

Die Aufgabe wird durch ein Verfahren zur Steuerung eines elektrischen Antriebs einer Komponente einer mobilen Arbeitsmaschine, insbesondere einer elektrischen Lenkung, mit den Merkmalen des unabhängigen Anspruchs 1 sowie einen elektrischen Antrieb einer Komponente einer mobilen Arbeitsmaschine mit den Merkmalen des unabhängigen Anspruchs 10 gelöst. Vorteilhafte Weiterbildungen werden in den Unteransprüchen angegeben.

Vorteilhaft weist bei einem Verfahren zur Steuerung eines elektrischen Antriebs einer Komponente einer mobilen Arbeitsmaschine, insbesondere eines Antriebs einer elektrischen Lenkung, der elektrische Antrieb einen Drehstrommotor und einen die Drehzahl des Drehstrommotors erfassenden Drehzahlsensor, einen regelbaren Umrichter für die Versorgung des Drehstrommotors mit elektrischer Energie und eine Steuervorrichtung auf, die in Wirkverbindung mit einem Sollwertgeber, dem Umrichter und dem Drehzahlsensor steht. Die Steuervorrichtung regelt abhängig von dem Signal des Sollwertgebers den Drehstrommotor mit einer unter Verwendung des Signals des Drehzahlsensors bestimmten Istdrehzahl feldorientiert und bestimmt gleichzeitig oder zumindest für Kontrollzeiträume gleichzeitig anhand einer Modellrechnung des Betriebsverhaltens des Drehstrommotors die Drehzahl des Drehstrommotors unabhängig von dem Signal des Drehzahlsensors als Kontrolldrehzahl. Bei einer Abweichung der Kontrolldrehzahl von der istdrehzahl größer als ein festgelegter Toleranzwert wird ein Fehler des Drehzahlsensors festgestellt.

Die Zuverlässigkeit des Antriebs der elektrischen Komponente kann dadurch erhöht werden, da der Ausfall des Drehzahlsensors zuverlässig innerhalb des Toleranzwertes erkannt werden kann. Für die Umsetzung der erfindungsgemäßen Lösung kann die oft ohnehin schon vorhandene Umrichtertechnologie eingesetzt werden, sodass die erfindungsgemäße Lösung zum Großteil durch Software umgesetzt werden kann, ohne dass Mehrkosten für zusätzliche Bauteile entstehen, da die Rechenleistung der Steuervorrichtung des Umrichters oftmals ausreichend ist, die Berechnung der Kontrolldrehzahl ohne Signal des Drehzahlsensors zusätzlich durchzuführen. Dabei ist es eventuell, je nach erwünschter Intensität der Überwachung, bereits ausreichend, wenn die Berechnung der Kontrolldrehzahl nicht kontinuierlich, sondern in Intervallen und für jeweils kurze Zeiträume erfolgt. Dadurch können die Anforderungen an die Rechenleistung reduziert werden. Bei einem Fehler des empfindlichen und auch teueren Bauteils des Drehzahlsensors, der als rein die Drehzahl messender Sensor, aber auch als ein die relative Winkellage erfassender Sensor ausgeführt sein kann, kann der Ausfall des Drehzahlsensors sicher erkannt werden. Es wird vermieden, dass der Ausfall erst über Folgefehler erkannt wird, oder sogar Fehlfunktionen des elektrischen Antriebs auftreten, deren Ursache nicht erkannt werden kann. Es ist eine schnellere Reaktion zur Vermeidung von Gefahrensituationen möglich. Eine redundante Ausführung des Drehzahlsensors, die aufwendig und teuer ist, kann vermieden werden, da der Drehzahlsensor durch die Berechnung der Lage des Flussvektors virtuell redundant ist.

In günstiger Ausführungsform werden für die feldorientierte Regelung des Drehstrommotors und/oder die Modellrechnung zur Bestimmung der Kontrolldrehzahl die Statorspannungen des Drehstrommotors verwendet, die aus einem oder mehreren Statorspannungssensoren bestimmt oder aus dem Messwert eines Spannungssensors für die Eingangsspannung des Umrichters berechnet werden.

Besonders vorteilhaft und einfach ist es, die Eingangsspannung des Umrichters zu messen, die beispielsweise bei einem Antrieb eines Flurförderzeugs mit einem verbrennungsmotorisch-elektrischen Antrieb der Spannung des Gleichspannungszwischenkreises entspricht. Im Falle eines batterie-elektrischen Flurförderzeugs entspricht die Eingangsspannung der Batteriespannung. Durch die Erfassung dieses einen Spannungswertes als Messgröße können bei bekanntem Betriebsverhalten des Umrichters die Statorspannungen berechnet werden und es kann basierend auf der gemessenen Eingangsspannung die Modellrechnung für die feldorientierte Regelung und/oder die Modellrechnung zur Bestimmung der Kontrolldrehzahl erfolgen.

Für die feldorientierte Regelung des Drehstrommotors und/oder die Modellrechnung zur Bestimmung der Kontrolldrehzahl können Statorströme des Drehstrommotors verwendet werden, die durch einen oder mehrere Statorstromsensoren erfasst werden. Für die Modellrechnung werden auch die Statorströme benötigt. Wenn die Lasten auf die Phasen der Statorwicklungen des Drehstrommotors sich gleichmäßig aufteilen, reicht eventuell die Erfassung nur einzelner Phasen.

Vorteilhaft ist der Drehstrommotor ein Asynchron-Drehstrommotor.

Ein Asynchron-Drehstrommotor ist aufgrund des Kurzschlussläufers eine verschleißarme und robuste Motorform, die durch einen Umrichter in einem weiten Ausmaß für elektrische Antriebe einsetzbar ist. Bei mobilen Arbeitsmaschinen wie etwa Flurförderzeugen sind verschleißarme und robuste Elektromotoren besonders vorteilhaft. Zusätzlich ist der Asynchron-Drehstrommotor gegenüber beispielsweise einer permanent erregten Synchronmaschine kostengünstiger.

in günstiger Ausführungsform des Verfahrens führt bei einem erkannten Fehler des Drehzahlsensors die Steuervorrichtung einen Notbetrieb des elektrischen Antriebs durch, bei dem die Steuervorrichtung den Drehstrommotor unter Verwendung der von dem Signal des Drehzahlsensors unabhängig bestimmten Kontrolldrehzahl feldorientiert regelt.

Damit ist es möglich, eine sofortige Notabschaltung des elektrischen Antriebes zu vermeiden, die eventuell eine Notabschaltung der gesamten mobilen Arbeitsmaschine erfordert.

Der Notbetrieb kann mit verringertem Drehmoment des Antriebs und/oder der Notbetrieb kann zeitlich begrenzt für eine bestimmte Zeitdauer erfolgen.

Dadurch kann der Antrieb die von diesem als Stellantrieb angetriebene Komponente noch in einen definierten sicheren Zustand verbringen.

In günstiger Ausführungsform ist der elektrische Antrieb eine elektrische Lenkung, insbesondere eine elektrische Lenkung eines Flurförderzeuges, und der Sollwertgeber ein Lenkgeber, insbesondere ein Lenkrad.

Aus Sicherheitsgründen wird bei einer elektrischen Lenkung eine weitestgehende Redundanz des Systems gefordert. Wenn das erfindungsgemäße Verfahren bei einer elektrischen Lenkung eingesetzt wird, ermöglicht dies bei nur einem Drehzahlsensor für den Antrieb der elektrischen Lenkung eine virtuelle Redundanz für diesen Drehzahlsensor, da dessen Ausfall zuverlässig erkannt werden kann. Dabei kann eine elektrische Lenkung bei einem Leistungsteil einen doppelten Controller für die Steuerung aufweisen. Die feldorientierte Regelung und die Bestimmung der Kontrolldrehzahl können in einer Alternative in unterschiedlichen Controllern erfolgen.

In vorteilhafter Ausgestaltung des Verfahrens wird ein Notbetrieb der elektrischen Lenkung für eine bestimmte Zeitdauer, insbesondere bis zu einem Stillstand der mobilen Arbeitsmaschine, wenn diese in Bewegung ist, durchgeführt und/oder erfolgt ein Notbetrieb mit verringertem Drehmoment des Antriebs der elektrischen Lenkung.

Indem zum Beispiel noch ein Notbetrieb der elektrischen Lenkung bis zu einem Stillstand der sich in Bewegung befindenden mobilen Arbeitsmaschine durchgeführt wird, kann verhindert werden, dass eine Notbremsung mit maximaler Bremskraft durchgeführt werden muss, die eventuell auch zu Gefahrensituationen führen kann, wie etwa bei einem Flurförderzeug, insbesondere einem Gabelstapler, mit zumindest teilweise angehobener Last. Da bei einem Notbetrieb die feldorientierte Regelung allein über die ohne Signal des Drehzahlsensors bestimmte Kontrolldrehzahl erfolgt, ist das maximal mögliche Drehmoment des Drehstrommotors geringer, da die Regelung nicht ebenso exakt erfolgen kann wie bei Berücksichtigung des Signals des Drehzahlsensors. Dies gilt vor allem für geringe Drehzahlen des Drehstrommotors nahe dem Stillstand, wenn keine zusätzlichen Verfahren wie hochfrequente Testsignale eingesetzt werden. Solange die mobile Arbeitsmaschine sich in Bewegung befindet, ist der Widerstand des oder der gelenkten Räder gegen ein Einschlagen wegen der bei sich drehendem Rad geringeren Reibung erheblich geringer, als wenn im Stillstand eine Betätigung der elektrischen Lenkung erfolgt. Ein Notbetrieb ist daher auch mit dem verringerten Drehmoment möglich, bzw. es ist eventuell im Stand in dem Notbetrieb nicht oder nur eingeschränkt möglich, zu lenken. Durch die Beschränkung des Notbetriebs auf einen gewissen Zeitraum oder bis zu einem Stillstand der mobilen Arbeitsmaschine kann sicher gestellt werden, dass die elektrische Lenkung nicht ohne Redundanz weiter benutzt wird.

Es kann ein Lageistwertsensor zur Erfassung eines Lenkeinschlags eines gelenkten Rades vorhanden sein und dessen Funktion durch Aufintegrieren der gemessenen Drehzahl sowie der Kontrolldrehzahl und Überprüfen des Überschreitens eines Toleranzwerts für die Abweichung überwacht werden.

Durch die Modellrechnung und der aus dieser errechneten Kontrolldrehzahl des Drehstrommotors kann über eine Integration ein Lagewert für die Verdrehung des gelenkten Rades entsprechend dem Lenkeinschlag errechnet werden. Dadurch kann nach Berücksichtigung einer Übersetzung der Umdrehungen des Drehstrommotors der elektrischen Lenkung in einen Lenkeinschlag die Funktion des Lageistwertsensors ebenfalls überwacht werden, ohne dass dieser redundant ausgelegt sein muss, indem mit einem entsprechenden Wert basierend auf der gemessenen Drehzahl oder alternativ direkt mit dem Messwert des Lageistwertsensors verglichen wird.

Die Aufgabe wird auch durch einen elektrischen Antrieb einer Komponente einer mobilen Arbeitsmaschine, insbesondere eines Lenkantriebs einer elektrischen Lenkung, gelöst, wobei der elektrische Antrieb einen Drehstrommotor und einen die Drehzahl des Drehstrommotors erfassenden Drehzahlsensor, einen regelbaren Umrichter für die Versorgung des Drehstrommotors mit elektrischer Energie und eine Steuervorrichtung aufweist, die in Wirkverbindung mit einem Sollwertgeber, dem Umrichter und dem Drehzahlsensor steht, und die Steuervorrichtung eines der zuvor beschriebenen Verfahren durchführt.

Der elektrische Antrieb einer Komponente einer mobilen Arbeitsmaschine weist die schon zuvor beschriebenen Vorteile des Verfahrens auf.

Vorteilhaft ist der elektrische Antrieb eine elektrische Lenkung, insbesondere eine elektrische Lenkung eines Flurförderzeuges, und der Sollwertgeber ein Lenkgeber, insbesondere ein Lenkrad, und führt die Steuervorrichtung ein zuvor beschriebenes Verfahren für die Regelung eines elektrischen Antriebs einer elektrischen Lenkung durch.

Der elektrische Antrieb einer elektrischen Lenkung weist die schon zuvor beschriebenen Vorteile des Verfahrens für die Regelung eines elektrischen Antriebs einer elektrischen Lenkung auf.

Weitere Vorteile und Einzelheiten der Erfindung werden anhand der in den schematischen Figuren dargestellten Ausführungsbeispiele näher erläutert. Hierbei zeigt die
- Fig. 1: schematisch in Seitenansicht eine als Gegengewichtsgabelstapler ausgeführte mobile Arbeitsmaschine mit einem als elektrische Lenkung ausgeführten erfindungsgemäßen elektrischen Antrieb,
- Fig. 2: schematisch die erfindungsgemäße elektrische Lenkung der Fig. 1 und
- Fig. 3: ein Regelungsschema eines erfindungsgemäßen Verfahrens zur Steuerung der elektrischen Lenkung der Fig. 2.

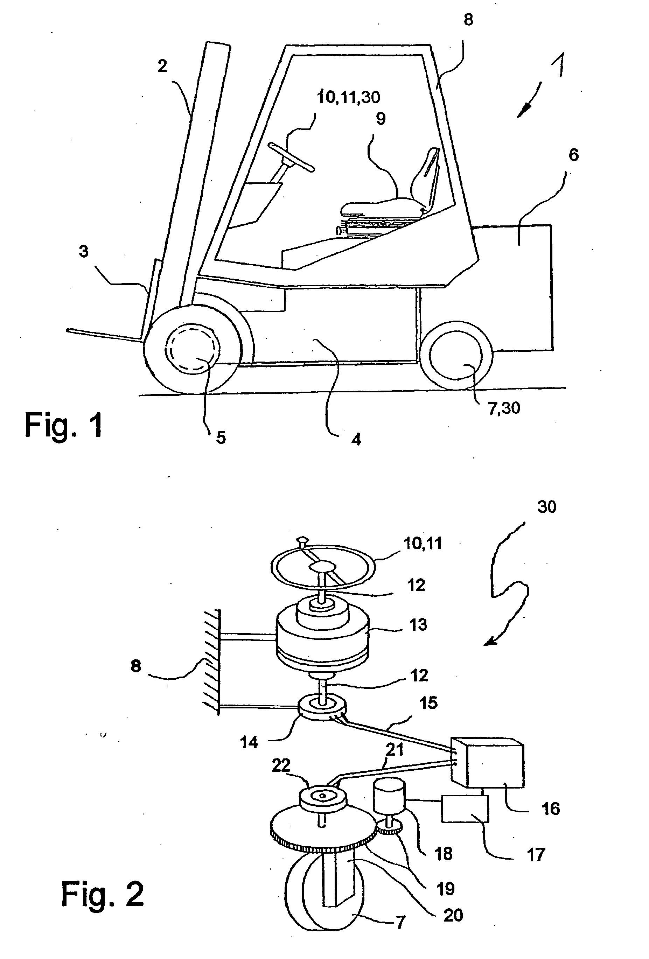

Die Fig. 1 zeigt schematisch in Seitenansicht eine als Flurförderzeug, beispielsweise als Gegengewichtsgabelstapler, ausgeführte mobile Arbeitsmaschine 1 mit einer elektrischen Lenkvorrichtung 30 als erfindungsgemäßem elektrischen Antrieb für eine Komponente der mobilen Arbeitsmaschine. An einem Hubgerüst 2 ist eine Lastgabel 3 angeordnet und an einem Rahmen 4 sind vordere Räder 5 sowie unterhalb eines Gegengewichts 6 mindestens ein gelenktes Rad 7 angeordnet, das mit einem elektrischen Antrieb zur Einstellung des Lenkeinschlags versehen ist. Das erfindungsgemäße Verfahren kann sowohl bei Flurförderzeugen in 3-Rad-Bauweise, als auch bei Flurförderzeugen in 4-Rad-Bauweise als mobile Arbeitsmaschine eingesetzt werden. In einer Fahrerkabine 8 ist ein Fahrersitz 9 und vor diesem ein Sollwertgeber in Form eines Lenkgebers 10 für den elektrischen Antrieb der Lenkung angeordnet, hier in Form eines Lenkrades 11.

Die Fig. 2 zeigt schematisch den elektrischen Antrieb als erfindungsgemäße elektrische Lenkung 30 des Gegengewichtgabelstaplers aus der Fig. 1. Dargestellt ist der von dem Lenkrad 11 gebildete Lenkgeber 10, eine Lenkwelle 12, eine Lagerung 13 an der Fahrerkabine 8 und ein Lenkgebersensor 14 als Sollwertgeber. Der Lenkgebersensor 14 erfasst die Winkelstellung der Lenkwelle 12 und gibt ein entsprechendes Signal über eine Signalleitung 15 an eine Steuervorrichtung 16 ab. Die Steuervorrichtung 16 steuert einen Wechselrichter 17 an, der aus einem nicht dargestellten Gleichspannungszwischenkreis eine Eingangsspannung bezieht und die Statorwicklungen eines als Asynchron-Drehstrommotors ausgeführten Drehstrommotors 18 mit Strom versorgt, der von ebenfalls nicht dargestellten Statorstromsensoren gemessen wird. Der Drehstrommotor 18 verdreht über ein Getriebe 19, das von einem Zahnradgetriebe gebildet werden kann, das an einem Drehschemel 20 angeordnete gelenkte Rad 7. Als Getriebe 19 kann auch ein Kettengetriebe oder ein Riemengetriebe eingesetzt werden. Über eine weitere Signalleitung 21 ist die Steuervorrichtung 16 mit einem Lageistwertsensor 22 verbunden, der den Lenkeinschlag des gelenkten Rades 7 erfasst.

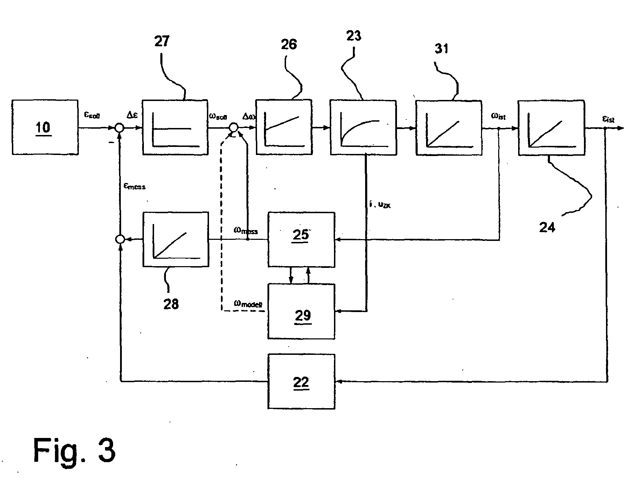

Die Fig. 3 zeigt ein Regelungsschema eines erfindungsgemäßen Verfahrens zur Steuerung der elektrischen Lenkung 30 der Fig. 2 als Ausführungsform eines elektrischen Antriebes einer Komponente einer mobilen Arbeitsmaschine.

In einem Drehzahlregelkreis wird über einen Drehzahlregler 26, den als PT1 -Glied 23 dargestellten geschlossenen Stromregelkreis und eine mechanische Drehzahlregelstrecke 31 der Drehstrommotor 18 des Lenkantriebs angesteuert, der in Bezug auf die sich aus der Ansteuerung ergebende Lage εᵢₛₜ des Lenkeinschlags des gelenkten Rades 7 wie ein Integrationsglied 24 wirkt, so dass sich abhängig von den aufintegrierten Werten der Drehzahl w und einer Übersetzung des Getriebes 19 der Wert εᵢₛₜ ergibt. Der Wert der Istdrehzahl ωₘₑₛₛ für die Drehzahlregelung wird durch einen Drehzahlsensor 25 auf der Motorwelle des Drehstrommotors 18 erfasst.

Der Drehzahlregelung des Drehstrommotors 18 ist eine Lageregelung des Lenkeinschlages des gelenkten Rades 7 mit redundanter Istwertaufnahme überlagert, die aus dem als Potentiometer ausgebildeten Lageistwertsensor 22 den Istwert der Lage εᵢₛₜ des Lenkeinschlags des gelenkten Rades 7 oder gegebenenfalls der mehreren gelenkten Räder erhält. Über ein Proportionalglied 27 steuert die überlagerte Lageregelung die Drehzahlregelung an. Die Drehzahlregelung erfolgt dabei als feldorientierte Drehzahlregelung.

Zur Initialisierung erfolgt ein Abgleich zwischen Lageregelung und Drehzahlregelung über ein Integrationsglied 28.

Die Regelung wird insgesamt von dem Lenkgeber 10 als Sollwertgeber angesteuert, beispielsweise einem Lenkwinkelpotentiometer. Auf der Grundlage der Statorströme i und der Gleichspannungszwischenkreisspannung U_{ZK} des Gleichspannungszwischenkreises bestimmt eine Modellrechnung 29 eine Kontrolldrehzahl ω_{modell} für den Drehstrommotor 18. Die Istdrehzahl ωₘₑₛₛ und die Kontrolldrehzahl ω_{modell} werden miteinander verglichen und bei einer Abweichung größer als ein festgestellter Toleranzwert wird ein Ausfall des Drehzahlsensors 25 festgestellt. Daraufhin erfolgt ein Notbetrieb, bei dem für die feldorientierte Regelung bzw. die Drehzahlregelung des Drehstrommotors 18 nur noch die Kontrolldrehzahl ω_{modell} verwendet wird und der falsche oder nicht mehr vorhandene Wert der Istdrehzahl ωₘₑₛₛ unberücksichtigt bleibt. In diesem Notbetrieb kann der als Beispiel beschriebene Gegengewichtgabelstapler sicher und weiterhin lenkbar abgebremst werden. Somit erfolgt nicht nur eine Überprüfung der Lageregelung des gelenkten Rades 7 auf einen Ausfall des Lageistwertsensors 22 sondern auch der unterlegten Drehzahlregelung des Drehstrommotors 18.

## Patentansprüche

1. Verfahren zur Steuerung eines elektrischen Antriebs einer Komponente einer mobilen Arbeitsmaschine (1), insbesondere eines Antriebs einer elektrischen Lenkung (30), wobei der elektrische Antrieb einen Drehstrommotor (18) und einen die Drehzahl des Drehstrommotors (18) erfassenden Drehzahlsensor (25), einen regelbaren Umrichter (17) für die Versorgung des Drehstrommotors (18) mit elektrischer Energie und eine Steuervorrichtung (16) aufweist, die in Wirkverbindung mit einem Sollwertgeber, dem Umrichter (17) und dem Drehzahlsensor (25) steht, **dadurch gekennzeichnet, dass** bei dem Verfahren die Steuervorrichtung (16) abhängig von dem Signal des Sollwertgebers den Drehstrommotor (18) mit einer unter Verwendung des Signals des Drehzahlsensors (25) bestimmten Istdrehzahl (ωₘₑₛₛ) feldorientiert regelt und gleichzeitig oder zumindest für Kontrollzeiträume gleichzeitig anhand einer Modellrechnung (29) des Betriebsverhaltens des Drehstrommotors (18) die Drehzahl des Drehstrommotors (18) unabhängig von dem Signal des Drehzahlsensors (25) als Kontrolldrehzahl (ω_{modell}) bestimmt und bei einer Abweichung der Kontrolldrehzahl (ω_{modell}) von der Istdrehzahl (ωₘₑₛₛ) größer als ein festgelegter Toleranzwert ein Fehler des Drehzahlsensors (25) festgestellt wird.

2. Verfahren nach Anspruch 1,
**dadurch gekennzeichnet,**
**dass** für die feldorientierte Regelung des Drehstrommotors (18) und/oder die Modellrechnung (29) zur Bestimmung der Kontrolldrehzahl (ω_{modell}) die Statorspannungen des Drehstrommotors (18) verwendet werden, die aus einem oder mehreren Statorspannungssensoren bestimmt oder aus dem Messwert (U_{ZK}) eines Spannungssensor für die Eingangsspannung des Umrichters (17) berechnet werden.

3. Verfahren nach Anspruch 1 oder 2,
**dadurch gekennzeichnet,**
**dass** für die feldorientierte Regelung des Drehstrommotors (18) und/oder die Modellrechnung (29) zur Bestimmung der Kontrolldrehzahl (ω_{modell}) Statorströme (i) des Drehstrommotors (18) verwendet werden, die durch einen oder mehrere Statorstromsensoren erfasst werden.

4. Verfahren nach einem der Ansprüche 1 bis 3,
**dadurch gekennzeichnet,**
**dass** der Drehstrommotor (18) ein Asynchron-Drehstrommotor ist.

5. Verfahren nach einem der Ansprüche 1 bis 4,
**dadurch gekennzeichnet,**
**dass** bei einem erkannten Fehler des Drehzahlsensors (25) die Steuervorrichtung (16) einen Notbetrieb des elektrischen Antriebs durchführt, bei dem die Steuervorrichtung den Drehstrommotor (18) unter Verwendung der von dem Signal des Drehzahlsensors (25) unabhängig bestimmten Kontrolldrehzahl (ω_{modell}) feldorientiert regelt.

6. Verfahren nach Anspruch 5,
**dadurch gekennzeichnet,**
**dass** der Notbetrieb mit verringertem Drehmoment des Antriebs erfolgt und/oder der Notbetrieb zeitlich begrenzt für eine bestimmte Zeitdauer durchgeführt wird.

7. Verfahren nach einem der Ansprüche 1 bis 6,
**dadurch gekennzeichnet,**
**dass** der elektrische Antrieb eine elektrische Lenkung (30), insbesondere eine elektrische Lenkung eines Flurförderzeuges, und der Sollwertgeber ein Lenkgeber (10), insbesondere ein Lenkrad (11), ist.

8. Verfahren nach Anspruch 5 und Anspruch 7,
**dadurch gekennzeichnet,**
**dass** ein Notbetrieb der elektrischen Lenkung (30) für eine bestimmte Zeitdauer, insbesondere bis zu einem Stillstand der mobilen Arbeitsmaschine, wenn diese in Bewegung ist, durchgeführt wird und/oder ein Notbetrieb mit verringertem Drehmoment des Antriebs der elektrischen Lenkung (30) erfolgt.

9. Verfahren nach Anspruch 7 oder 8,
**dadurch gekennzeichnet,**
**dass** ein Lageistwertsensor (22) zur Erfassung eines Lenkeinschlags eines gelenkten Rades (7) vorhanden ist und dessen Funktion durch Aufintegrieren der gemessenen Drehzahl (ωₘₑₛₛ) sowie der Kontrolldrehzahl (ω_{modell}) und Überprüfen des Überschreitens eines Toleranzwerts für die Abweichung überwacht wird.

10. Elektrischer Antrieb einer Komponente einer mobilen Arbeitsmaschine (1), insbesondere eines Lenkantriebs einer elektrischen Lenkung (30), wobei der elektrische Antrieb einen Drehstrommotor (18) und einen die Drehzahl des Drehstrommotor erfassenden Drehzahlsensor (25), einen regelbaren Umrichter (17) für die Versorgung des Drehstrommotors (18) mit elektrischer Energie und eine Steuervorrichtung (16) aufweist, die in Wirkverbindung mit einem Sollwertgeber, dem Umrichter (17) und dem Drehzahlsensor (25) steht, und wobei die Steuervorrichtung (16) ein Verfahren nach einem der Ansprüche 1 bis 6 durchführt.

11. Elektrischer Antrieb nach Anspruch 10,
**dadurch gekennzeichnet,**
**dass** der elektrische Antrieb eine elektrische Lenkung (30), insbesondere eine elektrische Lenkung eines Flurförderzeuges, und der Sollwertgeber ein Lenkgeber (10), insbesondere ein Lenkrad (11), ist und die Steuervorrichtung (16) ein Verfahren nach einem der Ansprüche 7 bis 9 durchführt.

## Claims

1. Method for controlling an electric drive of a component of a mobile work machine (1), in particular a drive of an electric steering system (30), wherein the electric drive has a three-phase motor (18) and a rotation-speed sensor (25) which detects the rotation speed of the three-phase motor (18), a controllable converter (17) for supplying electrical energy to the three-phase motor (18), and a control apparatus (16) which is operatively connected to a setpoint-value transmitter, to the converter (17) and to the rotation-speed sensor (25), **characterized in that**, in the method, the control apparatus (16) controls the three-phase motor (18) in a field-oriented manner with an actual rotation speed (ωₘₑₐₛᵤᵣₑ) which is determined using the signal from the rotation-speed sensor (25), as a function of the signal from the setpoint-value transmitter, and at the same time or at least for control time periods simultaneously determines the rotation speed of the three-phase motor (18) independent of the signal from the rotation-speed sensor (25) as a supervision rotation speed (ω_{model}) on the basis of a model calculation (29) of the operating behaviour of the three-phase motor (18), and, in the event of a deviation in the supervision rotation speed (ω_{model}) from the actual rotation speed (ωₘₑₐₛᵤᵣₑ) being greater than a defined tolerance value, a fault in the rotation speed sensor (25) is established.

2. Method according to Claim 1, **characterized in that**, for the field-oriented control of the three-phase motor (18) and/or the model calculation (29) for determining the supervision rotation speed (ω_{model}), the stator voltages of the three-phase motor (18) are used, these stator voltages being determined from one or more stator-voltage sensors or being calculated from the measurement value (U_{ZK}) of a voltage sensor for the input voltage of the convertor (17).

3. Method according to Claim 1 or 2, **characterized in that**, for the field-oriented control of the three-phase motor (18) and/or the model calculation (29) for determining the supervision rotation speed (ω_{model}), stator currents (i) of the three-phase motor (18) are used, these stator currents being detected by one or more stator-current sensors.

4. Method according to one of Claims 1 to 3, **characterized in that** the three-phase motor (18) is an asynchronous three-phase motor.

5. Method according to one of Claims 1 to 4, **characterized in that**, when a fault in the rotation-speed sensor (25) is identified, the control apparatus (16) implements emergency operation of the electric drive, in which the control apparatus controls the three-phase motor (18) in a field-oriented manner using the supervision rotation speed (ω_{model}) which is independently determined from the signal from the rotation-speed sensor (25).

6. Method according to Claim 5, **characterized in that** emergency operation is performed with reduced torque of the drive and/or emergency operation is implemented for a specific time period in a manner restricted with respect to time.

7. Method according to one of Claims 1 to 6, **characterized in that** the electric drive is an electric steering system (30), in particular an electric steering system of an industrial truck, and the setpoint-value transmitter is a steering transmitter (10), in particular a steering wheel (11).

8. Method according to Claim 5 and Claim 7, **characterized in that** emergency operation of the electric steering system (30) is implemented for a specific time period, in particular until the mobile work machine comes to a stop if said work machine is moving, and/or emergency operation is performed with reduced torque of the drive of the electric steering system (30).

9. Method according to Claim 7 or 8, **characterized in that** an actual-value position sensor (22) for detecting a steering angle of a steered wheel (7) is present, and the function of said actual-value position sensor is monitored by integrating the measured rotation speed (ωₘₑₐₛᵤᵣₑ) and the supervision rotation speed (ω_{model}) and checking whether a tolerance value for the deviation is exceeded.

10. Electric drive of a component of a mobile work machine (1), in particular a steering drive of an electric steering system (30), wherein the electric drive has a three-phase motor (18) and a rotation-speed sensor (25) which detects the rotation speed of the three-phase motor, a controllable converter (17) for supplying electrical energy to the three-phase motor (18), and a control apparatus (16) which is operatively connected to a setpoint-value transmitter, to the converter (17) and to the rotation-speed sensor (25), and wherein the control apparatus (16) implements a method according to one of Claims 1 to 6.

11. Electric drive according to Claim 10, **characterized in that** the electric drive is an electric steering system (30), in particular an electric steering system of an industrial truck, and the setpoint-value transmitter is a steering transmitter (10), in particular a steering wheel (11), and the control apparatus (16) implements a method according to one of Claims 7 to 9.

## Revendications

1. Procédé pour commander un mécanisme d'entraînement électrique d'un composant d'une machine de travail mobile (1), notamment un mécanisme d'entraînement d'une direction électrique (30), selon lequel le mécanisme d'entraînement électrique présente un moteur à courant triphasé (18) et un capteur tachymétrique (25) qui capte la vitesse de rotation du moteur à courant triphasé (18), un onduleur réglable (17) pour l'alimentation du moteur à courant triphasé (18) en énergie électrique et un dispositif de commande (16), lequel est en liaison active avec un codeur de valeur de consigne, l'onduleur (17) et le capteur tachymétrique (25), **caractérisé en ce que** lors du procédé, le dispositif de commande (16) régule le moteur à courant triphasé (18) avec orientation du champ en fonction du signal du codeur de valeur de consigne avec une vitesse de rotation réelle (ωₘₑₛₛ) déterminée en utilisant le signal du capteur tachymétrique (25) et, simultanément ou simultanément au moins pendant les périodes de contrôle, détermine la vitesse de rotation du moteur à courant triphasé (18) indépendamment du signal du capteur tachymétrique (25) en tant que vitesse de rotation de contrôle (ω_{modell}) au moyen d'un modèle de calcul (29) du comportement opérationnel du moteur à courant triphasé (18) et un défaut du capteur tachymétrique (25) est constaté en cas d'écart entre la vitesse de rotation de contrôle (ω_{modell}) et la vitesse de rotation réelle (ωₘₑₛₛ) qui est supérieur à une valeur de tolérance fixée.

2. Procédé selon la revendication 1, **caractérisé en ce que** les tensions de stator du moteur à courant triphasé (18) sont utilisées pour la régulation du moteur à courant triphasé (18) avec orientation du champ et/ou le modèle de calcul (29) destiné à déterminer la vitesse de rotation de contrôle (ω_{modell}), lesquelles sont déterminées à partir d'un ou plusieurs capteurs de tension de stator ou à partir de la valeur mesurée (U_{ZK}) d'un capteur de tension pour la tension d'entrée de l'onduleur (17).

3. Procédé selon la revendication 1 ou 2, **caractérisé en ce que** les courants de stator (i) du moteur à courant triphasé (18) sont utilisés pour la régulation du moteur à courant triphasé (18) avec orientation du champ et/ou le modèle de calcul (29) destiné à déterminer la vitesse de rotation de contrôle (ω_{modell}), lesquels sont captés par un ou plusieurs capteurs de courant de stator.

4. Procédé selon l'une des revendications 1 à 3, **caractérisé en ce que** le moteur à courant triphasé (18) est un moteur à courant triphasé asynchrone.

5. Procédé selon l'une des revendications 1 à 4, **caractérisé en ce qu'**en cas de défaut reconnu du capteur tachymétrique (25), le dispositif de commande (16) exécute un fonctionnement de secours du mécanisme d'entraînement électrique, avec lequel le dispositif de commande régule le moteur à courant triphasé (18) avec orientation du champ en utilisant la vitesse de rotation de contrôle (ω_{modell}) déterminée indépendamment du signal du capteur tachymétrique (25).

6. Procédé selon la revendication 5, **caractérisé en ce que** le fonctionnement de secours s'effectue avec un couple réduit du mécanisme d'entraînement et/ou le fonctionnement de secours est exécuté de manière limitée dans le temps pendant une durée donnée.

7. Procédé selon l'une des revendications 1 à 6, **caractérisé en ce que** le mécanisme d'entraînement électrique est une direction électrique (30), notamment une direction électrique d'un chariot de manutention, et le codeur de valeur de consigne est un codeur de direction (10), notamment un volant de direction (11).

8. Procédé selon la revendication 5 et la revendication 7, **caractérisé en ce qu'**un fonctionnement de secours de la direction électrique (30) est exécuté pendant une durée donnée, notamment jusqu'à l'immobilisation de la machine de travail mobile lorsque celle-ci est en mouvement, et/ou un fonctionnement de secours avec un couple réduit du mécanisme d'entraînement de la direction électrique (30) est effectué.

9. Procédé selon la revendication 7 ou 8, **caractérisé en ce qu'**il existe un capteur de valeur réelle de la position (22) pour capter un débattement de direction d'une roue orientée (7) et sa fonction est surveillée par une intégration de la vitesse de rotation mesurée (ωₘₑₛₛ) ainsi que de la vitesse de rotation de contrôle (ω_{modell}) et par un contrôle du dépassement d'une valeur de tolérance pour l'écart.

10. Mécanisme d'entraînement électrique d'un composant d'une machine de travail mobile (1), notamment un mécanisme d'entraînement d'une direction électrique (30), avec lequel le mécanisme d'entraînement électrique présente un moteur à courant triphasé (18) et un capteur tachymétrique (25) qui capte la vitesse de rotation du moteur à courant triphasé, un onduleur réglable (17) pour l'alimentation du moteur à courant triphasé (18) en énergie électrique et un dispositif de commande (16), lequel est en liaison active avec un codeur de valeur de consigne, l'onduleur (17) et le capteur tachymétrique (25), et avec lequel le dispositif de commande (16) met en oeuvre un procédé selon l'une des revendications 1 à 6.

11. Mécanisme d'entraînement électrique selon la revendication 10, **caractérisé en ce que** le mécanisme d'entraînement électrique est une direction électrique (30), notamment une direction électrique d'un chariot de manutention, et le codeur de valeur de consigne est un codeur de direction (10), notamment un volant de direction (11), et le dispositif de commande (16) met en oeuvre un procédé selon l'une des revendications 7 à 9.
